# EUROPEAN PATENT SPECIFICATION

(11) **EP 2 908 658 B1**
(45) Date of publication and mention of the grant of the patent: **29.01.2025**
(21) Application number: 13779206.5
(22) Date of filing: 17.10.2013
(51) Int. Cl.: A23K 10/22, A23K 50/80

(54) **PROCESS FOR PRODUCTION OF ANIMAL FEED COMPONENTS BASED ON MUSSELS**
VERFAHREN FÜR DIE HERSTELLUNG VON TIERFUTTER AUF MUSCHELBASIS
PROCÉDÉ DE PRODUCTION DE NOURRITURE POUR ANIMAUX À BASE DE MOULE

(30) Priority: 18.10.2012 EP 12188952
(43) Date of publication of application: 26.08.2015
(73) Proprietor: MusselFeed AB, 474 31 Ellös (SE)
(72) Inventor: LINDAHL, Odd, S-474 91 Ellös (SE)
(74) Representative: Lind Edlund Kenamets Intellectual Property AB
(86) International application number: PCT/EP2013/071687
(87) International publication number: WO 2014/060497

(56) References cited:
- DE-A1- 102010 002 210
- DATABASE WPI Week 200222, Derwent World Patents Index; AN 2002-169224, XP002689186, "Production of feed for breeding fish, involves crushing oyster shells and hard-shelled mussel as main material, mixing lobster and cuttlefish, condensing liquid and cooling"

## Description

### Technical Field

The present invention relates to a process for preparing animal feed from mussels, such as *Mytilus spp* and *Dressenia* spp.

### Background

Shellfish and fish have been used for production of functional food ingredients and flavour enhancers in parts of Asia for a very long time. Fermented fish products, for example, have a long tradition in South-East Asia. Mussel meat has an overall high nutritional content, in particular a high protein content (20 g/ 100 g meat, w/w), as well as a low fat content (3 g/100 g meat, w/w) and low caloric value (110 kcal/100g meat, w/w). Mussel meat also provides a good source of zinc, copper and iodine (Silva et al, JFS, Vol. 75, No. 1:201 0).

Examples of a method and an apparatus for producing fish feed from shellfish debris such as mussels are disclosed in JP 2004-351307. The apparatus comprises means for separating useful extracts, decomposed matter and shells from shellfish debris growing on power plant cooling pipes or the like. Shellfish is collected, crushed, extracted, and decomposed by addition of hot water and an enzyme such as papain. Decomposed matter is further extracted and shells and flesh may be separated.

Another example of using mussels for fish feed production is provided in DE 102010002210. In this case, mussel biomass is mixed with smectite to improve storage stability. Document KR 2001 0089861 describes fish feed made of oysters. The oysters are crushed and frozen.

Due to their high nutritional content, mussels remain an interesting material for use in food processing. Industrial processes for extracting the nutrition from mussels may however be further improved in order to increase process efficiency as well as expected demands from feed industry.

### Summary

An object of the invention is to provide an improved animal feed having a high nutritional content, such as a high protein content, that is environment friendly. A further object is to provide a process for preparing such an animal feed, which process provides improved energy consumption and process economy. These objects are achieved, in a first aspect, by means of a process for preparing animal feed from mussels, comprising
decomposing the mussel meat of the mussels by dissolution, comprising heating the mussels to a temperature of between 30 and 50 °C while stirring without adding exogenous enzymes, to form a suspension of liquefied mussel meat, shells and optionally shells having mussel meat attached thereto, and separating shells and shells having mussel meat attached thereto from the suspension, to form a liquefied mussel meat fraction.

Starting from mussels including shells, the process as described above thus achieves decomposition by dissolution of mussel meat under gentle conditions, such as under moderate heating and stirring. The inventor has surprisingly found that no exogenous enzymes need to be added in order to accomplish the decomposition under the described gentle conditions. Mechanical stirring performed concurrently with the heating may physically affect both the shells and the mussel meat of the mussels. The shells may at least partly break, the mussel meat may at least partly come off the shells and the tissue may be at least partly dispersed and/or divided into pieces. The shells as such may moreover facilitate the decomposition of the mussel meat, by tearing or dividing the mussel meat into smaller pieces. By stressing the mussel tissue in this way, the mussel meat may be further decomposed.

The decomposing comprises heating the mussels to a temperature of between 30 and 50 °C and maintaining the temperature between 30 and 50 °C while decomposing is conducted.

According to one embodiment, said decomposing proceeds for a time period of between approximately 1 - 2 hours. It is contemplated that dissolution for a relatively short period of time such as 1-2 hours provides a suspension having a desired content of both a low molecular weight fraction rich in important amino acids, such as methionine, threonine, cysteine and lysine, and a (relatively) high(er) molecular weight fraction having functional properties, the suspension being suitable for use as animal feed, in particular feed for poultry, fish and other mono-gastric animals.

The separation enables formation of a liquefied mussel meat fraction which is free from shells, or essentially free from shells. A shell fraction comprising shells and a mixed fraction comprising shells having mussel meat attached thereto may optionally individually be formed. By separating the shell-containing fractions from the decomposed liquefied mussel meat, various animal feed products that are suitable for different animals may be provided in parallel. The shells separated in this way may be at least partly broken to provide a shell fraction comprising partly broken shells.

In one embodiment, the liquefied mussel meat fraction separated as described above is heated, e.g. to a temperature of maximum 90 °C. The stability of the mussel meat fraction is improved by said heating by accomplishing elimination of any harmful bacteria, such as salmonella bacteria and enterobacteria. In some instances, the heating may also serve to terminate the decomposing process, which may also improve stability of the mixture. In some embodiments, heating and stirring are performed concurrently in order to achieve a desired homogeneous temperature increase.

Heating may be performed solely for hygienic and safety reasons and not primarily for, e.g., drying reasons. In such instances, heating provides a liquid product comprising liquefied mussel meat. The water content of the liquefied mussel meat resulting from the heating may still be high, and if a relatively dry feed product is desired, the water content may have to be reduced. This may be accomplished by removal of water and/or concentration of the liquefied mussel meat in order to provide a relatively dry final product suitable for distribution and use as an animal feed.

In another embodiment, the liquefied mussel meat fraction separated as described above is heated to a temperature of e.g. maximum 90 °C not only for hygienic reasons but also to dry the liquefied mussel meat and to form dried mussel meat. Heating is thus conducted until a dry mussel meat product is obtained. This dried mussel meat is, in a further embodiment, grinded to form mussel meal. Mussel meal having a high nutritional content prepared by the described process may serve as animal feed.

In one embodiment, the water content of the liquefied mussel meat is reduced prior to said heating. Removing excess water from the liquefied mussel meat before heating may be an energy efficient way of reducing the water content of the liquefied mussel meat as well as of a resulting animal feed product.

In some embodiments, stirring is performed concurrently with heating of the liquefied mussel meat fraction in order to for example achieve the desired homogeneous temperature increase.

The shell fraction may also be processed. According to one embodiment, the shell fraction separated as described above is heated to a temperature of e.g. maximum 90 °C to form dried shells. In some embodiments, heating and stirring are performed concurrently in order to for example achieve a desired homogeneous temperature increase. This shell fraction may in itself serve as an animal feed by providing a source of calcium, or may conveniently be mixed with any other animal feed component(s), such as for example liquefied or dried mussel meat or mussel meal prepared as described above. An animal feed product comprising shells may be advantageous in that it further provides a source of calcium. In addition, the shells may provide activation of e.g. laying hens and chickens such that feather picking is avoided.

Furthermore, the mixed fraction optionally separated as described above is, in one embodiment, heated to a temperature of e.g. maximum 90 °C to form dried shells having dried mussel meat attached thereto. Heating is preferably conducted carefully and successively in order not to over-heat the mussel meat still being attached to the shells. In some embodiments, heating and stirring are performed concurrently in order to for example achieve a desired homogeneous temperature increase. This process provides yet another animal feed product comprising shells having dried mussel meat attached thereto and having the advantages as previously described.

In some embodiments, the shell-containing fractions are separated from the suspension as one fraction, or the shell-containing fractions are combined after being individually separated from the suspension. The pooled shell-containing fractions may thereafter be processed as previously described for the individual fractions.

Alternatively, the (entire) suspension is after dissolution for e.g. 1-2 hours in one embodiment heated, optionally to a temperature of maximum 90 °C, to dry the suspension to form a mixture of dried mussel meat, shells and optionally shells having dried mussel meat attached thereto. As previously described, heating may be performed to improve feed hygiene such that a safe and stable product is provided that fulfil the safety requirements of feed control legislation. The stability may moreover be improved in that the total water content of the formed mixed product is reduced, to e.g. 6 - 7 % by weight or less.

The mixture resulting from heating of the suspension may additionally be grinded to form a mixture of mussel meal, shells and optionally shells having dried mussel meat attached thereto. As previously described, an animal feed product containing shells may serve to activate e.g. laying hens and chickens and to prevent e.g. feather picking. While grinding the decomposed mussel meat to mussel meal, the shells may be crushed or grinded to smaller chips in order to further make the calcium accessible for animals. Optionally, at least part of the shells having and not having mussel meat attached thereto may be removed prior to grinding the mussel meat to meal or after grinding the mussel meat to meal. In this way, a balanced shell content, or calcium content, in the animal feed is achieved.

The processes described above providing shell-containing animal feed may additionally, in further embodiments, comprise stirring of the suspension, mixture or fraction to form a suspension, mixture or fraction comprising shell chips. Stirring may be conducted while drying. By mechanical stirring or cracking, the size of the shells may be reduced moderately or considerably in order to produce shell chips of a desired size. A desired size fraction may further be separated through sorting.

According to one embodiment, the mussels used in the present invention belong to the *Mytilus spp* species, such as the *Mytilus edulis* species, or to the *Dressenia spp* species, such as the *Dressenia polymorpha* species.

According to one embodiment, the decomposing involves no further additions of external reagents or substances. External reagents or substances should in this context be understood as any ingredients that may chemically or physiologically affect the mussels. This example process thus accomplishes decomposition of the mussel meat by heating and stirring only, thus without any addition of e.g. salt, acids, bases and exogenous enzymes. The mussels to be used in the process may come in various forms, for example, whole, pre-crushed and/or dewatered. In one embodiment, the process thus comprises initially providing whole mussels, for example in sizes of 1 to 10 cm, and removing water from the mussels by breaking the shells and withdrawing water. Removal of excess so-called shell water prior to decomposing the mussel meat may provide a suspension with a relatively lower water content. This may further facilitate drying of the suspension. In addition, dewatering may remove any excess salt water from the mussels and thereby contribute to the provision of a final product having a balanced salt content. As much salt water as possible may have to be removed in order to provide a tasty and healthy animal feed for the various animal species. Pre-crushing of the mussels may also stress the mussel tissue further such as to facilitate initiation of decomposition.

According to one embodiment, decomposing further comprises adding water to the mussels. Depending on in which form the mussels are provided, small amounts of water may have to be added, preferably prior to heating. Addition of water may simplify removal of mussel meat from the shells to provide a suspension of liquefied mussel meat and (clean) shells, and preferably no, or nearly no, shells having mussel meat attached thereto. Although the added water may be removed in subsequent process steps, it may still enable provision of a product, such as mussel meal, having a balanced salt (e.g. NaCl) content.

It should be understood that specific embodiments and advantages described in connection with the process aspect of the present invention may be equally relevant to the product aspects of the present invention.

The above disclosed objects are moreover accomplished, in another aspect, by an animal feed product as obtainable by the process described above wherein a mussel meal is provided, the animal feed product having a protein content of above 40 %, such as between 40 and 70 % by weight, and a lipid content of above 4 %, such as between 4 and 15 % by weight. The animal feed product, obtainable by said advantageous process, has high protein content and may readily be provided to animals, such as poultry, e.g. laying hens and chickens, fish and other mono-gastric animals. Said animal feed product may be free from shells and shell residues, or essentially free from shells and shell residues.

The above disclosed objects are moreover accomplished, in another aspect, by an animal feed product as obtainable by the process described above wherein liquefied mussel meat is provided, the animal feed product having a protein content of above 40 %, such as between 40 and 70 % by weight, and a lipid content of above 4 %, such as between 4 and 15 % by weight. The animal feed product, obtainable by said advantageous process, has high protein content and may readily be provided to animals, such as poultry, e.g. laying hens and chickens, fish and other mono-gastric animals.

The above disclosed objects are moreover accomplished, in another aspect, by an animal feed product as obtainable by the process as previously described, wherein dried shells having dried meat attached thereto is formed, the animal feed product comprising between 50 and 90 % of shells and between 10 and 50 % of dried mussel meat, by total weight, said dried mussel meat having a protein content of above 40 %, such as between 40 and 70 %, and a lipid content of above 4 %, such as between 4 and 15 %, by weight of the mussel meat. As previously described, an animal feed product as obtainable by a process as described herein provides several important nutrition for animals. Both shells and meat are used for producing the animal feed product, which thus provides a product comprising proteins, lipids and calcium and in some instances astaxanthin and a number of micro-minerals.

The above disclosed objects are moreover accomplished, in another aspect, by an animal feed product as obtainable by the process described above wherein the entire suspension is dried and the mussel meat is grinded to provide a mixture of mussel meal, shells and shells having dried mussel meat attached thereto, the animal feed product comprising between 50 and 90 % of shells and between 10 and 50 % of mussel meal, by total weight, said mussel meal having a protein content of above 40 %, such as between 40 and 70 % and a lipid content of above 4 %, such as between 4 and 15 %, by weight of the mussel meal. The animal feed product thus comprises proteins, and lipids, as well as calcium-containing mussel shells. The animal feed may moreover contain astaxanthin and a number of micro-minerals. Such animal feed is advantageous in that it provides high protein content as well as further nutrition to animals such as poultry, e.g. laying hens and chickens, fish and other mono-gastric animals.

Being based on the entire suspension resulting from decomposition, the resulting animal feed is a mixture of mussel meal, shells and shells having mussel meat attached thereto. The ratio of the latter may be relatively small since most of the meat may have been separated from the shells during processing. The content of shells, including any shells having mussel meat attached thereto, and mussel meal is calculated by total weight of the components, whereas the content of the mussel meal is based on the weight on the mussel meal only.

The above disclosed objects are moreover accomplished, in another aspect, by an animal feed product based on mussels, for example mussels described as suitable for the present process aspect, comprising mussel meal having a protein content of above 40 %, such as between 40 and 70 % by weight, and a lipid content of above 4 %, such as between 4 and 15 % by weight. Such animal feed is advantageous in that it provides high protein content as well as further nutrition to animals such as poultry, e.g. laying hens and chickens, fish and other mono-gastric animals.

The above disclosed objects are moreover accomplished, in another aspect, by an animal feed product based on mussels, comprising between 50 and 90 % by weight of shells and between 10 and 50 % by weight of dried mussel meat at least partly being attached to the shells, said dried mussel meat having a protein content of above 40 %, such as between 40 and 70 %,and a lipid content of above 4 %, such as between 4 and 15 %, by dry weight of the mussel meat.

The above disclosed objects are moreover accomplished, in another aspect, by an animal feed product based on mussels, comprising liquefied mussel meat, i.e. decomposed and dissolved mussel meat, said liquefied mussel meat having a protein content of above 40 %, such as between 40 and 70 % and a lipid content of above 4 %, such as between 4 and 15 %, by weight of the mussel meat.

The above disclosed objects are moreover accomplished, in another aspect, by an animal feed product based on mussels, comprising between 50 and 90 % by weight of shells and between 10 and 50 % by weight of mussel meal, said mussel meal having a protein content of above 40 %, such as between 40 and 70 %, and a lipid content of above 4 %, such as between 4 and 15 %, by weight of the mussel meal. Apart from providing proteins and lipids, the animal feed product provides a source of calcium by incorporating a shell fraction. The shell fraction may moreover serve to activate e.g. poultry and thereby prevent undesired feather picking. In some instances, the shells comprised in the animal feed may have mussel meat attached thereto.

Further objects and features of the present invention will be apparent from the description and the appended claims.

### Brief description of the drawing

The invention will now be described in more detail with reference to the appended drawing in which:

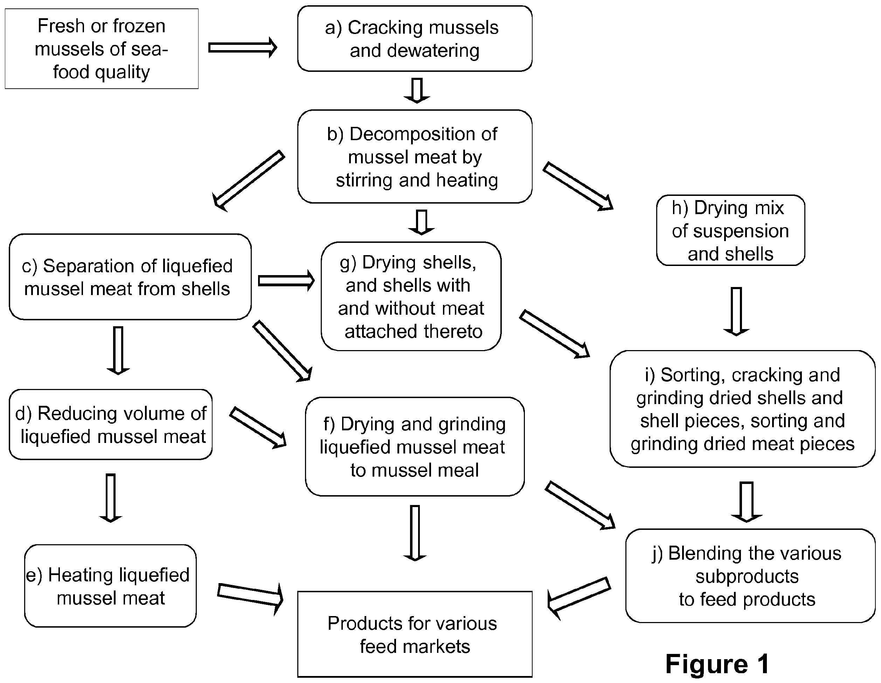

Figure 1 is a schematic representation of an embodiment of the process according to the invention.

### Detailed Description

Mussels to be used in the present process may be whole mussels; fresh or frozen, or slightly broken mussels having meat attached to the shells; such as lightly crushed, broken or shattered mussels. Whole mussels may come in sizes of e.g. 1 cm to 10 cm. The origin of the *Mytilus spp* mussels may vary, they may for example be derived from seas and oceans having a specific temperature and/or salinity, such as from temperate seas having a salinity range from approximately 4 psu (practical salinity unit) in brackish waters and to above 35 psu, e.g. full salinity of the oceans. The mussels may for example have their origin in the Baltic Sea, Skagerak, Kattegat, the North Sea, the Atlantic, the Mediterranean and the Pacific. The origin of the *Dressenia spp* mussels may also vary. Such mussels may be derived from fresh water or slightly brackish waters conditions having a salinity less than approximately 2 psu.

As used in this context, "mussels" should be understood as a combination of mussel meat and shells in any form, e.g. fresh, frozen, whole or pre-crushed. The mussels are preferably of sea-food or comparable quality.

Decomposition of shellfish tissue is in this context to be understood as a process step involving moderate heating and stirring, wherein the soft tissue of the shellfish dissolves into liquid without, or essentially without, addition of any external reagents or substances. It is hypothesized that moderate heating may break weak non-covalent bonds of certain proteins and/or decompose specific structural proteins. In some instances of the process of the invention, endogenous enzymes may by digestion of large proteins moreover play a role in the decomposition. One specific example of a process wherein endogenous enzymes facilitate decomposition is a process in which autolysis takes place. Autolysis is a reaction that may be defined as hydrolysis of proteins into component amino acids that takes place by itself by activity of endogenous enzymes.

In some instances, water may however be added during the decomposition step. Water may be added in order to simplify and further remove mussel meat from shells to provide mussel meat separated from shells and clean(er) shells. Any water added during the decomposition step may be removed during subsequent process steps, for example before or after the liquefied mussel meat, shell fraction, or mixed fraction is heated to form dried mussel meat, dried shells or dried shells having mussel meat attached thereto.

In processes where autolysis takes place, subsequent heating to a temperature of e.g. maximum 90 °C may further accomplish termination of the autolysis. Termination of any autolysis taking place intends to inactivate the endogenous enzymes by heating in order to provide a stable product comprising mussel meat, optionally in the form of mussel meal, and optionally shells.

In embodiments of the present invention, decomposition of mussel meat by dissolution may be conducted for a time period of approximately 30 minutes to 4 hours, such as for example, 45 minutes to 3 hours, such as for example 1 hour to 2.5 hours, such as for example 1 hour to 2 hours. In some instances, decomposition is conducted for a time period of approximately 1 hour, 1.5 hours or 2 hours.

In embodiments of the present invention, the mussels may be heated to decompose the mussel meat to a temperature of 25 to 60 °C, such as for example, 25 to 55 °C, such as for example 30 to 55 °C, such as for example 30 to 50 °C, such as for example 35 to 50 °C, such as for example 40 to 50 °C. In some instances, the mussels are heated to a temperature of approximately 40 °C, such as approximately 45 °C, such as approximately 50 °C.

Stirring is conducted while decomposing the mussel meat. It is to be understood that stirring may be accomplished in various ways by different types of equipment. For example, the stirring during decomposition may be gentle and slow, whereas stirring during optional later operations of the process may be more distinct and faster.

In one embodiment of the process, there is no adjustment of chemical conditions such as ionic charges and pH in the decomposing step of the process. In other words, no salts or charged substances, nor any acidic or basis substances are added. The mussels are in this embodiment thus decomposed solely by heating and stirring during a defined time period. Small amounts of water may however optionally be added as described above, preferably prior to heating.

When more or less all mussel meat has been decomposed into a liquid, thus forming a suspension of liquefied mussel meat and (broken) shells, including any shells having mussel meat attached thereto, drying may be initiated. Optionally, different fractions may be separated from the suspension prior to drying depending on the particular animal feed product(s) to be produced. In particular, shell containing fractions may be removed from the liquefied mussel meat prior to heating. Any shell-containing fractions may be separated from the liquefied mussel meat by for example filtration. This is advantageous, since an essentially, or entirely, shell-free liquefied mussel meat fraction, and subsequently an essentially, or entirely, shell-free mussel meat based animal feed, may be produced. In some embodiments, decomposition (dissolution) and drying may be accomplished in the same equipment.

In principal, drying may be conducted according to more or less the same procedure for the different process embodiments. For example, drying is preferably conducted successively in a controlled manner. This prevents mussel meat or meal from getting over-heated which may destroy important proteins and give a bad taste to the final product. Drying is for example accomplished by heating to a temperature of maximum 100 °C, such as maximum 90 °C, such as maximum 85 °C, such as maximum 80 °C. When the desired maximum temperature is reached, the temperature may be maintained at that level for a period of time which is long enough to ensure that homogenous drying is accomplished and that required micro-biological and hygienical requirements are fulfilled.

In one embodiment of the process, wherein mussel meal is to be the final product, drying may be conducted until the total water content of the mussel meal is less than 8 % by weight, such as less than 7 % by weight, such as less than 6 % by weight, such as less than 5 % by weight. Drying may for example be conducted in a roller dryer that enables concurrent drying and grinding of mussel meat to meal. Thus, no separate equipment is needed for grinding of mussel meat to meal.

In one embodiment of the process, wherein decomposed liquefied mussel meat is to be the final product, drying in the sense of heating to provide an essentially dry product is consequently not conducted. Instead, the liquefied mussel meat is heated, for stability and feed safety reasons as previously mentioned, relatively quickly. The product resulting from said heating is thus still in liquid form.

In one embodiment of the process, wherein shell-containing animal feed are to be produced, drying and optionally stirring may be performed in a drum dryer. Shell-containing animal feed are for example shells as such, shells having dried meat attached thereto and mussel meal mixed with shells.

Depending on the process and on the animal feed to be produced, the different types of drying equipment may thus have to be used.

In some embodiments of the present process, stirring is conducted while drying. The drying equipment may thus allow for concurrent stirring. Stirring for example prevents build up of temperature gradients in the suspension, liquefied mussel meat, mixed fraction or shell fraction and thus accomplishes more homogenous drying. Stirring may also affect the size of any shells. If for example shell chips are desired, the rotational speed may be higher than if larger pieces of shells are desired.

Depending on the amount of mussels, e.g. 1 ton or 100 ton, and the equipment used, the process parameters for decomposing and/or drying, e.g. supply of heat, may have to be adjusted.

As mentioned above, grinding of mussel meat to mussel meal may in some instances be performed at the same time. The equipment used for those process operations may thus be the same. One example of an apparatus that enables concurrent drying and grinding of mussel meat to mussel meal is, as previously mentioned, a roller dryer.

Depending on the separation equipment used, separation of different product fractions may be conducted before or after drying. The liquid portion of the suspension may for example be withdrawn to obtain a more or less separated liquefied mussel meat. Thereafter the liquefied mussel meat may be filtered in order to remove any remaining shells there from. In larger scale, separation may be accomplished by utilization of a separator such as a decanter.

The animal feed product comprising both mussel meal (or dried mussel meat) and shells as described herein may have a content of mussel meal (or dried mussel meat) and shells, based on the total weight of the components, in a ratio of 10 % to 90 % by weight, 15 % to 85 % by weight, 20 % to 80 % by weight, 25 % to 75 % by weight, 30 % to 70 % by weight, 35 % to 65 % by weight, 40 % to 60 % by weight, 45 % to 55 % by weight, 50 % to 50 % by weight, 55 % to 45 % by weight, 60 % to 40 % by weight, 65 % to 35 % by weight, 70 % to 30 % by weight, 75 % to 25 % by weight, 80 % to 20 % by weight, 85 % to 15 % by weight, 90 % to 10 % by weight, 95 % to 5 % by weight, or 100 % by weight. Such an animal feed product may be obtainable by a process as described herein and may have protein and lipid contents as described below.

Different animals may require different animal feed products, i.e. animal feed products in different forms that have different content. It should be understood that the animal feed products as herein described may be combined as individual animal feed components in order to provide animal feed in a specific desired form. In other words, a meal-based product may be combined with dried meat and shell if so is desired. The final products may be combined or the same effect may be achieved during the process by separating/not separating the different fractions from the suspension resulting from the decomposition.

An animal feed product based on mussel meal, liquefied or dried (decomposed) mussel meat as described herein may have a protein content, based on the dry weight of the mussel meal or mussel meat, of above 40 %, such as between 40 and 70 %, such as between 40 and 65 %, such as between 45 and 65 %, such as between 45 and 60 %, such as between 50 and 60 %, such as between 55 and 65 %, such as between 55 and 60 %, such as between 60 and 65 %. Such animal feeds may be obtained by processes as described herein.

An animal feed product based on mussel meal, liquefied or dried (decomposed) mussel meat as described herein may have a total content of the amino acids lysine, threonine, cysteine and methionine, based on the dry weight of the mussel meal or mussel meat, of above 4 %, such as between 4 and 6 %, such as between 4,5 and 5,5 %, such as approximately 5 %. Such animal feeds may be obtained by processes as described herein.

An animal feed product based on mussel meal, liquefied or dried (decomposed) mussel meat as described herein may have a lipid content, based on the weight of the mussel meal or mussel meat, of above 4 %, such as between 4 and 15 %, such as between 5 and 14 %, such as between 5 and 13 %, such as between 5 and 12 %, such as between 6 and 11 %, such as between 7 and 10 %, such as between 8 and 10 %. Such animal feeds may be obtained by processes as described herein.

An exemplary process will now be described with reference to Figure 1. It should be understood that each of the process routes depicted in Fig.1 provides an optional route for production of an animal feed. Each of the process routes may thus be performed separately or may be combined with (an)other process route(s) as desired.

Fresh or frozen mussels of sea-food quality or equivalent quality are initially provided. The shells of the mussels are cracked to enable withdrawing of water (dewatering) of the mussels as described in a). This provides cracked mussels from which excess (salt) water have been removed. Should cracked mussels for example be provided to the process, this step may be omitted.

Depending on the water content and e.g. the salinity of the water, a small amount of water may be added to the mussels. This may increase the yield of meat, clean the shells from meat and decrease the salt content of the final product(s).

The cracked mussels are thereafter heated, e.g. to a temperature of between 30 and 50 °C for approximately one hour. Stirring is performed during heating. This accomplishes decomposition b), or dissolution, of the mussel meat such as to provide a suspension of mussel meat in liquid form (liquefied mussel meat) and shells, some of which may have (non-dissolved) mussel meat attached thereto.

According to a first process route, decomposition b) is followed by separation c) of different fractions from the suspension. The dissolved mussel meat, also denoted as liquefied mussel meat, separated in c) might contain water that for process economical reasons should be removed prior to heating. The volume of the liquefied mussel meat may therefore be reduced d) by removal of nearly all of the remaining water by evaporation, e.g. in a roller dryer. The liquefied mussel meat, from which water may have been removed, is subsequently forwarded to a heating equipment in which the liquefied mussel meat is heated e). Heating is performed immediately, e.g. to a temperature of maximum 90 °C. This may terminate decomposition and provides a stable and safe product.

According to another process route, liquefied mussel meat derived from separation c) is also dried and grinded f) to mussel meal. Drying is performed by immediate heating, e.g. to a temperature of maximum 90 °C. When the desired, e.g. maximum, temperature is reached, heating is stopped and the temperature is maintained e.g. at the maximum for a period of time that is sufficient for producing an essentially dry mussel meal. The dry mussel meal may optionally be blended, e.g. with other mussel-based constituents or components as provided by other process routes, and optionally bagged to provide a desired animal feed composition. Alternatively, volume reduced and liquefied mussel meat, resulting from the optional volume reduction step d), might be dried and grinded f) to mussel meal.

According to another process route, the shells separated from the suspension c) are forwarded to drying g). The shells, of which some may have (non-dissolved) mussel meat attached thereto, are dried by heating, e.g. to a temperature of maximum 85-90 °C while stirring. When the desired, e.g. maximum, temperature is reached, said temperature may be maintained for a period of time before ending the drying.

Heat is carefully supplied in order to avoid over-heating of any mussel meat. By varying the temperature and the stirring, different products may be obtained. A relatively low frequent stirring combined with a relatively higher drying temperature provides shells having dried meat attached thereto, whereas a relatively high frequent stirring combined with a relatively low temperature drying provides a mixture of mussel meal and shell chips.

The shell-containing product obtained in g) may be further sorted, cracked or grinded i) to provide an animal feed in a desired form. Thereafter, the shell-containing products may be blended to provide a desired animal feed composition.

According to another process route, (part of) the suspension derived from decomposition b) is forwarded to drying h). The suspension, comprising liquefied mussel meat and shells, including any shells having meat attached thereto, is dried by heating, e.g. to a temperature of maximum 90 °C. When the desired, e.g. maximum, temperature is reached, no further heat is added but the temperature is maintained at the desired level for a period of time that is sufficient to accomplish a sufficiently dry product. Stirring may be performed while drying. The dried suspension, comprising dried mussel meat and shells, including any shells having meat attached thereto, is forwarded to sorting, cracking and grinding i) before conducting blending j).

The different process routes as described above with reference to Fig.1 thus provides different animal feed products ready for distribution.

The present invention has been described with reference to a number of preferred embodiments, it will however be understood by those skilled in the art that various changes may be made and equivalents may be substituted for elements thereof without departing from the scope of the invention.

## Claims

1. A process for preparing animal feed from mussels, comprising:
decomposing the mussel meat of the mussels by dissolution, comprising heating the mussels to a temperature of between 30 and 50 °C while stirring without adding exogenous enzymes, to form a suspension of liquefied mussel meat, shells and shells having mussel meat attached thereto, and
separating shells and shells having mussel meat attached thereto from the suspension, to form a liquefied mussel meat fraction.

2. The process according to claim 1, wherein said decomposing proceeds for a time period of between approximately 1 - 2 hours.

3. The process according to claim 1, further comprising removing water from the liquefied mussel meat to form a liquified mussel meat having a reduced water content.

4. The process according to any one of the preceding claims, further comprising heating the liquefied mussel meat to dry the liquefied mussel meat and to form dried mussel meat, wherein said liquefied mussel meat is optionally heated to a temperature of maximum 90 °C.

5. The process according to claim 5, further comprising grinding the mussel meat to form mussel meal.

6. The process according to claim 1, further comprising forming a shell fraction comprising shells, and heating the shell fraction to form dried shells, wherein said shell fraction is optionally heated to a temperature of maximum 90 °C.

7. The process according to claim 1, further comprising forming a mixed fraction of shells having mussel meat attached thereto, and heating the mixed fraction to form dried shells having dried mussel meat attached thereto, wherein said mixed fraction is optionally heated to a temperature of maximum 90 °C.

8. The process according to any one of claims 6-7, further comprising stirring the shell fraction or mixed fraction to form a fraction comprising shell chips.

9. The process according to any preceding claim, comprising initially providing whole mussels, and removing water from the mussels by breaking the shells and withdrawing water.

10. The process accordign to claim 1, further comprising using the mussel meal fraction to obtain an animal feed product, said animal feed product having a protein content of above 40 % by weight and a lipid content of above 4 % by weight.

11. The process according to claim 7, further comprising using the mixed fraction to obtain an animal feed product, said animal feed product comprising between 50 and 90 % of shells and between 10 and 50 % of dried mussel meat, by total weight, said dried mussel meat having a protein content of above 40 % and a lipid content of above 4 %, by weight of the mussel meat.

## Patentansprüche

1. Verfahren zur Herstellung von Tierfutter aus Muscheln, umfassend:
Zersetzung des Muschelfleischs der Muscheln durch Auflösen, umfassend das Erhitzen der Muscheln auf eine Temperatur zwischen 30 und 50 °C unter Rühren ohne Zugabe exogener Enzyme, um eine Suspension aus verflüssigtem Muschelfleisch, Schalen und Muscheln mit daran haftendem Muschelfleisch zu bilden, und
Trennen von Schalen und Schalen mit daran haftendem Muschelfleisch aus der Suspension, um eine verflüssigte Muschelfleischfraktion zu bilden.

2. Verfahren nach Anspruch 1, wobei die Zersetzung über eine Zeitspanne von etwa 1 bis 2 Stunden erfolgt.

3. Verfahren nach Anspruch 1, das ferner das Entfernen von Wasser aus dem verflüssigten Muschelfleisch umfasst, um verflüssigtes Muschelfleisch mit einem reduzierten Wassergehalt zu bilden.

4. Verfahren nach einem der vorhergehenden Ansprüche, das ferner das Erhitzen des verflüssigten Muschelfleisches umfasst, um das verflüssigte Muschelfleisch zu trocknen und getrocknetes Muschelfleisch zu bilden, wobei das verflüssigte Muschelfleisch gegebenenfalls auf eine Temperatur von maximal 90 °C erhitzt wird.

5. Verfahren nach Anspruch 5, ferner umfassend das Zerkleinern des Muschelfleisches, um Muschelmehl zu bilden.

6. Verfahren nach Anspruch 1, ferner umfassend die Bildung einer Schalenfraktion, die Schalen umfasst, und die Erhitzung der Schalenfraktion zur Erzeugung getrockneter Schalen, wobei die Schalenfraktion optional auf eine Temperatur von maximal 90 °C erhitzt wird.

7. Verfahren nach Anspruch 1, ferner umfassend die Bildung einer gemischten Fraktion von Schalen mit daran haftendem Muschelfleisch und das Erhitzen der gemischten Fraktion zur Bildung getrockneter Schalen mit daran haftendem getrocknetem Muschelfleisch, wobei die gemischte Fraktion gegebenenfalls auf eine Temperatur von maximal 90 °C erhitzt wird.

8. Verfahren nach einem der Ansprüche 6 bis 7, ferner umfassend das Rühren der Schalenfraktion oder der gemischten Fraktion, um eine Fraktion mit Schalenchips zu bilden.

9. Verfahren nach einem der vorangehenden Ansprüche, umfassend zunächst das Bereitstellen ganzer Muscheln und das Entfernen des Wassers aus den Muscheln durch Aufbrechen der Schalen und Abziehen des Wassers.

10. Verfahren nach Anspruch 1, ferner umfassend die Verwendung der Muschelmehlfraktion zur Gewinnung eines Tierfutterprodukts, wobei das Tierfutterprodukt einen Proteingehalt von über 40 Gew.-% und einen Lipidgehalt von über 4 Gew.-% aufweist.

11. Verfahren nach Anspruch 7, ferner umfassend die Verwendung der gemischten Fraktion zur Gewinnung eines Tierfutterprodukts, wobei das Tierfutterprodukt zwischen 50 und 90 % Schalen und zwischen 10 und 50 % getrocknetes Muschelfleisch, bezogen auf das Gesamtgewicht, umfasst, wobei das getrocknete Muschelfleisch einen Proteingehalt von über 40 % und einen Lipidgehalt von über 4 %, bezogen auf das Gewicht des Muschelfleischs, aufweist.

## Revendications

1. Procédé de préparation d'aliments pour animaux à partir de moules, comprenant :
la décomposition de la chair de moule des moules par dissolution, comprenant le chauffage des moules à une température comprise entre 30 et 50°C tout en agitant sans addition d'enzymes exogènes, pour former une suspension de chair de moule liquéfiée, de coquilles et à laquelle est attachée la chair de moule, et
la séparation des coquilles et des coquilles ayant de la viande de moules attachée à celles-ci de la suspension, afin de former une fraction de viande de moules liquéfiée.

2. Procédé selon la revendication 1, dans lequel ladite décomposition se déroule pendant une période comprise entre environ 1 et 2 heures.

3. Procédé selon la revendication 1, comprenant en outre l'élimination de l'eau de la chair de moule liquéfiée pour former une chair de moule liquéfiée ayant une teneur en eau réduite.

4. Procédé selon l'une quelconque des revendications précédentes, comprenant en outre le chauffage de la viande de moules liquéfiée pour sécher la viande de moules liquéfiée et pour former de la viande de moules séchée, dans lequel ladite viande de moules liquéfiée est facultativement chauffée à une température maximale de 90°C.

5. Procédé selon la revendication 5, comprenant en outre le broyage de la chair de moule pour former de la farine de moule.

6. Procédé selon la revendication 1, comprenant en outre la formation d'une fraction de coquilles comprenant des coquilles, et le chauffage de la fraction de coquilles pour former des coquilles séchées, dans lequel ladite fraction de coquille est facultativement chauffée à une température maximale de 90°C.

7. Procédé selon la revendication 1, comprenant en outre la formation d'une fraction mélangée de coquilles auxquelles est attachée de la viande de moules, et le chauffage de la fraction mélangée pour former des coquilles séchées auxquelles est attachée de la viande de moules séchée, dans lequel ladite fraction mélangée est facultativement chauffée à une température maximale de 90°C.

8. Procédé selon l'une quelconque des revendications 6 à 7, comprenant en outre l'agitation de la fraction de coquilles ou de la fraction mélangée pour former une fraction comprenant des copeaux de coquilles.

9. Procédé selon l'une quelconque des revendications précédentes, comprenant la fourniture initiale de moules entières, et l'élimination de l'eau des moules en brisant les coquilles et en retirant l'eau.

10. Procédé selon la revendication 1, comprenant en outre l'utilisation de la fraction de farine de moules pour obtenir un produit alimentaire pour animaux, ledit produit alimentaire pour animaux ayant une teneur en protéines supérieure à 40 % en poids et une teneur en lipides supérieure à 4 % en poids.

11. Procédé selon la revendication 7, comprenant en outre l'utilisation de la fraction mixte pour obtenir un produit alimentaire pour animaux, ledit produit alimentaire pour animaux comprenant entre 50 et 90 % de coquilles et entre 10 et 50 % de viande de moules séchée, en poids total, ladite viande de moules séchée ayant une teneur en protéines supérieure à 40 % et une teneur en lipides supérieure à 4 % en poids des moules.
